# EUROPEAN PATENT APPLICATION

(11) **EP 0 718 756 A1**
(43) Date of publication of application: **26.06.1996**
(21) Application number: 95924507.7
(22) Date of filing: 05.07.1995
(51) Int. Cl.: G06F 9/06

(54) **SECURITY SYSTEM FOR SOFTWARE**

(30) Priority: 05.07.1994 JP 174933/94
(71) Applicant: KABUSHIKI KAISYA ADVANCE, Chuo-ku Tokyo 103 (JP)
(72) Inventor: WATANABE, Shinichirou 902, Kosyatowerkomatukawa, Tokyo 132 (JP); KUBAYASHI, Yasutaka, Tokorozawa-shi Saitama 359 (JP)
(74) Representative: Hamilton, Alistair
(86) International application number: JP9501344
(87) International publication number: WO9601450

(57) **Abstract**

A software protection system is proposed in which the use of software, by a simple operation, is allowed for only the authorized users, the use by the other users being excluded, and a dishonest alteration of a software is detected and an alarmed raised. There are provided a software supplier portion for preparing to supply a program to a software administration center portion and a user portion, the software administration center portion for converting the supplied program and preparing to supply this converted program to the user portion, and a user portion for converting the supplied program, comparing this converted program with the converted program supplied from the software administration center portion and, only when these compared converted programs coincide, carrying out program execution.

## Description

### TECHNICAL FIELD

The present invention relates to a system for protecting software. The system according to the present invention is used, for example, for protecting software, such as application software, an operating system, or the like and for protecting software against infection by a software virus.

### BACKGROUND ART

Unauthorized copying of application programs, operating system software and utility programs is a prevailing problem, and yet no good method to prevent such unauthorized copying has been found. Also, no satisfactory way to protect software against the invasion of a so-called software virus, which is a malicious program devised to dishonestly alter or destroy software, has been found. Thus, a suitable method and way to realize protection of software has been sought.

### DISCLOSURE OF THE INVENTION

An object of the present invention is to realize a software protection system in which the use of software by a simple operation is allowed for only authorized users, the use by the other users being excluded, and a dishonest alteration of a software can be detected and an alarm raised.

According to the present invention, there is provided a system for protecting software comprising: a software supplier portion for preparing to supply a program to a software administration center portion and a user portion; the software administration center portion connected to said software supplier portion for converting the supplied program in a predetermined manner and preparing to supply this converted program to the user portion; and the user portion connected to said software supplier portion and said software administration center portion, during use of the program, for converting the supplied program in a predetermined manner, comparing this converted program with the converted program supplied from said software administration center portion, and, only when these compared converted programs coincide, carrying out program execution.

Also, according to the present invention, there is also provided a system for protecting software comprising: a software supplier portion for enciphering a program by a first key to produce an enciphered program, enciphering the first key by a second key to produce the enciphered first key, supplying this enciphered program to a software administration center portion, and making ready for supplying the enciphered program and the enciphered first key to a user portion; the software administration center portion connected to said software supplier portion for converting the supplied enciphered program to produce the converted enciphered program, enciphering this converted program by a third key to produce an enciphered converted program, enciphering the third key by a fourth key to produce the enciphered third key, and preparing to supply the enciphered converted program and the enciphered third key to the user portion; and the user portion connected to said software supplier portion and said software administration center portion, during use of the program, for converting the enciphered program in a predetermined manner to produce the converted program; deciphering the enciphered third key by a fifth key to produce the deciphered third key, deciphering the enciphered converted program by the third key to produce the deciphered converted program, comparing this deciphered converted program and the converted program, and, only when these compared converted programs coincide, carrying out an execution of the program deciphered by the first key deciphered by a sixth key.

### BRIEF DESCRIPTION OF THE DRAWINGS

Figure 1 shows an information processing network to which a software protection system according to an embodiment of the present invention is applied; and
Fig. 2 shows an information processing network to which a software protection system according to another embodiment of the present invention is applied.

### BEST MODE FOR CARRYING OUT THE INVENTION

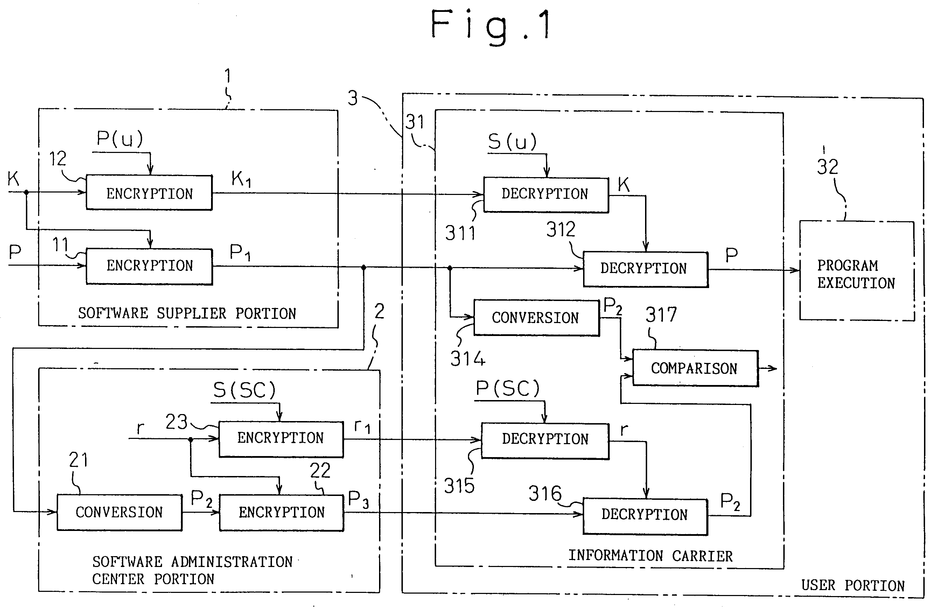

An information processing network to which a software protection system according to an embodiment of the present invention is applied is shown in Fig. 1. In the network, there is provided a software house 1, as a software supplier portion, which includes encryption devices 11 and 12. In the software house 1, all or a part of the program P is enciphered by a key K, which is specific to the program, to produce the enciphered program P₁. This enciphered program P₁ is a program which cannot be executed. This enciphered program P₁ is registered in a software administration center portion 2.

In accordance with a request from a user portion 3 which has purchased the enciphered program P₁, the key K is enciphered by the user's public key P(u) to produce the enciphered key K₁, and this enciphered key K₁ is delivered to the user portion 3.

In the software administration center portion 2, there are provided a conversion device 21 and encryption devices 22 and 23. In the software administration center portion 2, the enciphered program P₁ registered by the software house 1 is compressed by using a type of Hash Function to produce the compressed enciphered program P₂, this compressed enciphered program P₂ is enciphered by using a key r which is specific for the enciphered program P₁ to produce the enciphered compressed program P₃, and this key r is enciphered by using a secret key S(sc) of the software administration center portion 2 to produce the enciphered key r₁. Since the enciphered key r₁ and the enciphered compressed program P₃ can be preliminarily produced without specifying the user, these may be contained in the same storage medium as the storage medium for the enciphered program P₁ which is sold by the software house 1.

In the user portion 3, at the time of or after the purchase of the program, the notification of the purchase of the program, as well as the request for the key delivery, is communicated to the software house 1. The enciphered key K₁ sent from the software house 1 is input to an install software. In the user portion 3, a program execution is carried out by using a loader software and the information carrier device 31. The device 31 is an apparatus attached to the program execution device 32. To the program execution device 32, a keyboard display device, storage of the hard disk type, the magnetic disk type and the like, and the input/output devices therefor may be attached.

In the device 31, there are provided decryption devices 311, 312, 315, and 316, a conversion device 314, and a comparison device 317. The device 31 contains the secret key, the decryption program and authentication program of the user. The device 31 is coupled to the printer port, the RS232C port, on the like, of a personal computer by which the user intends to carry out the program execution so that the decryption of the data such as K₁, P₁, r₁, and P₃ and the authentication of the program are carried out. The device 31 may be, for example, an IC card which is connectable to a personal computer.

The encryption devices 11, 12, 22, and 23 can be constituted, for example, by the data encryption standard (DES), the fast data encipherment algorithm (FEAL) (registered trademark), and the like, but is not limited to these examples. These encryption devices may be either of the same type or of different types. Each of the decryption devices 311, 312, 315, and 316 constitutes a pair with each of the corresponding encryption devices. These decryption devices can be constituted by the decryption algorithm of the data encryption standard (DES), the fast data encipherment algorithm (FEAL), and the like, but is not limited to these examples.

The secret keys S(u) and P(sc) are preliminarily supplied to the user portion in the manner that these secret keys are written in the storage in the device 31. The conversion device using the Hash Function may be contained in the device 31, or the conversion means may be stored, as an algorithm, in the storage medium of the program execution device 32. It is possible to store all or some of the enciphered program P₁ and the enciphered specific key K₁ supplied from the software supplier portion and the enciphered key r and the enciphered compressed program P₂ supplied from the software administration center portion in a magnetic disk, a random access memory RAM, a read only memory ROM, and a photo magnetic disk in the program execution device and to cause the main processing to be carried out in the program execution device.

As the method for using the keys for the enciphered information, the public key system and the key pre-distribution system (KPS) are preferably used. The public key system is a system in which a public key, a public file concerning the public key, and a secret key are preliminarily produced, the public key is distributed individually, and the secret key is administrated confidentially. The production and the distribution of the public key, the public file concerning the public key, and the secret key are carried out mainly by the operation of the software administration center portion. However, this is not limited to such manner, but may be carried out by the user portion, the software supplier portion, or the combination of these. The manner of making the concrete content of each of the public key and the secret key are publicly known.

The key pre-distribution system (KPS) is a system in which the identifier of the other party side is applied to the specific secret algorithm of this party side to produce a key which is common with the other party side. The operation of the production of the secret algorithm and the like is carried out mainly in the software administration center portion. The software administration center portion individually has the center algorithm. By applying the identifiers of the software and the software supplier portion, the specific secret algorithm is produced.

The method for producing the center algorithm, the method for producing the secret algorithm, the method for producing the common encryption key, and the definitions of the entity and the identifier are described, for example, in Japanese Unexamined Patent Publication Nos. 63-36634, 63-107667, and the like.

The operation of the software administration center portion may be carried out in the user portion, the software supplier portion, or the combination of these. The above methods for using the above-mentioned keys are preferable ones, but are not limited to these methods. As the encryption algorithm, the data encryption standard method (DES), the fast data encipherment algorithm (FEAL) (registered trademark), and the like are used.

The software handled in the network shown in Fig. 1 is an application program, an operating system program, a utility program, or the like. The software supplier portion in the network shown in Fig. 1, which is a portion for supplying software to the user portion, is an entity for supplying, with or without reward, software to the user portion, in the form of retailer shop such as a software house, a related manufacturer, a retailer shop, a vender, a software or device for supplying another software, or the like. The software supplier portion may be incorporated either in the software administration center portion or in the user portion. The software supplier portion may assume the position of a user portion, if the software supplier portion is in the position to use a software. The user portion in the network shown in Fig. 1 is in the form of the user itself, a device which the software owned by a user causes to carry out a program execution, a device attached thereto, the software itself, or the like.

The operation of the network shown in Fig. 1 will be explained below. The assumed conditions of the operation are that (1) the user portion owns an information carrier device containing the secret key of this user portion, (2) the target program will not work if the user is not the authorized user, (3) backing-up can be carried out freely, and (4) the handling of the virus problem is enabled by a check for dishonest alteration of the data.

In the operation, first, all or a part of the program P to be delivered from the software supplier portion 1 to the user portion 3 is enciphered by the specific key K by using the encryption algorithm such as DES to produce the enciphered program P₁. After that, the enciphered program P₁ is registered in the software administration center portion 2.

In the portion 2, the enciphered program P₁ is compressed by using a Hash Function to produce the compressed enciphered program P₂ which is enciphered by using an encryption algorithm such as DES to produce the enciphered compressed program P₃. The key r is enciphered by using the secret key S(sc) of the software administration center portion 2.

At the time of, or after the receipt of, P₁, r₁, and P₃, the user portion 3 informs this receipt to the software supplier portion 1 and the like. In the software supplier portion, the specific key K of the program is enciphered by using the public key P(u) of the user portion to produce the enciphered key K₁ which is delivered to the user portion. In the user portion, the installation of K₁, P₁, r₁, and P₃ are carried out by using the exclusive installation software.

In the user portion 3, each time the program execution is carried out, P₁ is deciphered by the loader software by using the information carrier device 31 to produce the program P₁, and the deciphered program is converted by using the Hash Function to produce the compressed program P₂. r₁ is deciphered by using the public key P(sc) of the software administration center portion 2 to produce r, and P₃ is deciphered by using this r to produce the deciphered program P₂. This deciphered program P₂ is compared with the above-mentioned compressed program P₂ so that the checking of whether or not a dishonest alteration of P₁ has occurred is enabled. If the occurrence of a dishonest alteration is detected, it is possible to raise an alarm.

Since the enciphered algorithm P₁, the enciphered key r₁, and the enciphered compressed algorithm P₃ do not have the identification of the user portion 3, it is possible to preliminarily produce the same, and it is possible to deliver either from the software supplier portion 1 or from the software administration center portion 2.

Preferably, the information carrier device 31 which is attached to the program execution device 32 has a small size, a light weight, and a shape that does not need much space. Alternatively, the information carrier device is not necessarily provided and the program execution device itself may carry out all the operations.

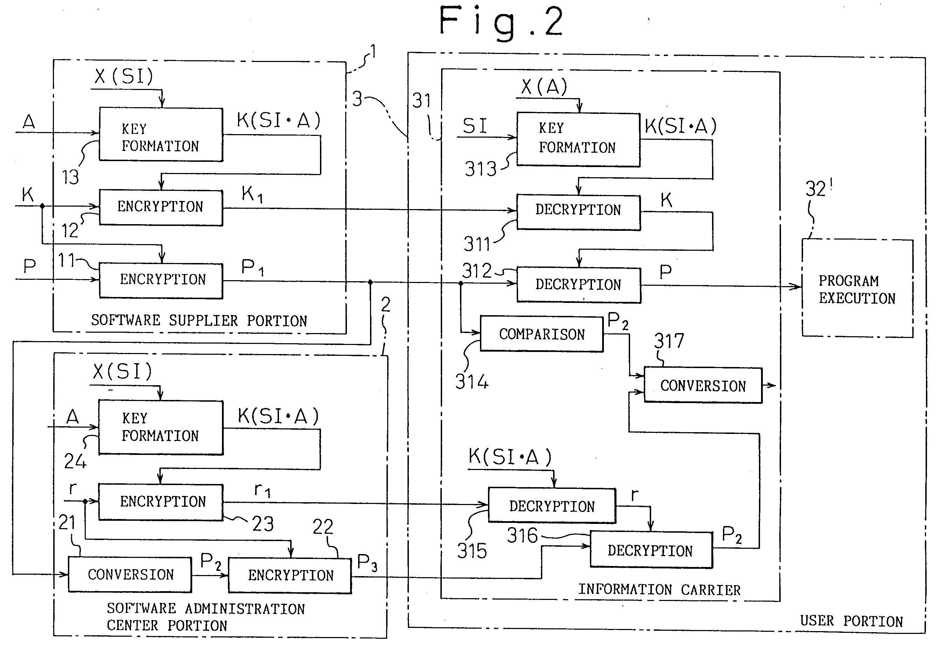

An information processing network to which a software protection system according to another embodiment of the present invention is applied is shown in Fig. 2. In the network, there is provided a software house 1, as a software supplier portion which includes encryption devices 11 and 12 and a key formation device 13. In the software house 1, all or a part of the program P is enciphered by a key K which is specific to the program to produce the enciphered program P₁. This enciphered program P₁ is a program which cannot be executed. This enciphered program P₁ is registered in a software administration center portion 2.

In accordance with a request from a user portion 3 which has purchased the enciphered program P₁, the common encryption key K(SI·A) of the key pre-distribution system (KPS) is produced by using the identifier A of the user portion, the key K is enciphered by using this K(SI·A), and the enciphered key K₁ is delivered to the user portion 3.

In the software administration center portion 2, there are provided a conversion device 21, encryption devices 22 and 23, and a key formation device 24. In the portion 2, the enciphered program P₁ registered by the software house 1 is compressed by using a type of Hash Function to produce the compressed enciphered program P₂, P₂ is enciphered by using a key r which is specific for the enciphered program P₁ to produce the enciphered compressed program P₃, and the key r is enciphered by using encryption key K(SI·A) which is common to the software supplier portion or the software and the user portion to produce the enciphered key r₁. Since P₃ can be preliminarily produced without specifying the user, P₃ may be contained in the same storage medium as the storage medium for the enciphered program P₁ which is sold by the software house 1. In the software administration center portion 2, the secret algorithm owned by the software supplier portion is either preliminarily held therein or successively brought therein. In this regard, it is possible that the specific algorithm is owned by the software administration center portion. In this case, when the compressed software and the like is to be sent to the user portion, it is possible that the key is produced by applying the identifier of the user portion to the secret algorithm of the software administration center portion to produce the key, and the key is produced by applying the identifier of the software administration portion to the secret algorithm of the user portion to produce the key in the user portion.

In the user portion 3, at the time of using, or after purchasing the program, the purchasing of the program is informed, as a request for delivery of the key, to the software supplier portion. In the user portion 3, the enciphered key K₁ sent from the software supplier portion 1 is input in the installation software, and the program execution is carried out by using the loader produced by the installation software and the information carrier device 31 attached to the program execution device 32. The information carrier device 31 is connected to the program execution device 32. A keyboard, a display device, a hard disk storage, a magnetic disk, and input/out device thereof may be attached to the program execution device 32. In the user portion 3, the identifier S(I) of the software supplier portion is supplied to the key formation device 313.

In the information carrier device 31, the secret key, the deciphering program, and the authentication program of the user portion are contained. The information carrier device 31 is adapted to be connected to the printer port, the RS232C port, on the like, on the personal computer by which the user portion intends to carry out the program execution so that the decryption of the data such as K₁, P₁, r₁, and P₃ and the authentication of the program are carried out. RS232C is a standard issued by the by Electronic Industries Association in the USA concerning an interface.

The encryption devices 11, 12, 22, and 23 in the network of Fig. 2 are constituted by the encryption algorithm of the data encryption standard method (DES), the fast data encipherment algorithm (FEAL) (registered trademark), and the like, but are not limited to these. All of the encryption devices may be different ones or the same one. Each of the decryption devices 311, 312, 315, and 316 constitutes a pair with each of the corresponding encryption devices. These decryption devices can be constituted by the decryption algorithm of the data encryption standard (DES), the fast data encipherment algorithm (FEAL), and the like, but are not limited to these examples.

The secret algorithm is preliminarily supplied to the user portion, and is written in the storage in the information carrier device 31. The conversion device constituted by the Hash Function owned by the user portion is either preliminarily contained in the information carrier device or stored as the algorithm in the storage in the program execution device.

It is possible to store all or a part of the enciphered program P₁, the enciphered specific key K₁ supplied from the software supplier portion 1, the enciphered key r₁ and the enciphered compressed program P₃ supplied from the software administration center portion 2 on a magnetic disk, in a random access memory RAM, in a read only memory ROM and on a photo magnetic disk of the program execution device, and the main processings are carried out in the program execution device. The identifier A of the software supplier portion and the software used by the user portion may be contained in the same storage medium as the storage medium for the enciphered program P₁ sold by the software house.

The operation of the network shown in Fig. 2 will be explained below. The conditions of the operation are assumed such that (1) the user portion owns an information carrier device containing the secret key of this user portion, (2) the target program will not work if the user is not the authorized user, (3) backing up can be carried out freely, and (4) handling of the virus problem is enabled by checking for dishonest alteration of the data.

In the operation, first, all or a part of the program P to be delivered from the software supplier portion 1 to the user portion 3 is preliminarily enciphered by the specific key K by using the encryption algorithm such as DES to produce the enciphered program P₁. After that, the enciphered program P₁ is registered in the software administration center portion 2.

In the portion 2, the enciphered program P₁ is compressed by using a Hash Function to produce the compressed enciphered program P₂ which is enciphered by using an encryption algorithm such as DES to produce the enciphered compressed program P₃. The key r is enciphered by using the encryption key K(SI·A) which is common to the software supplier portion or the software and the user portion to produce the enciphered key r₁.

At the time of, or after the receipt of, P₁, r₁, and P₃, the user portion 3 informs this receipt to the software supplier portion 1 and the like.

In the software supplier portion, the specific key K of the program is enciphered by using the encryption key K(SI·A) which is common to the software supplier portion or the software and the user portion to produce the enciphered key K₁ which is delivered to the user portion. In the user portion, the installation of K₁, P₁, r₁, and P₃ are carried out by using the exclusive installation software.

In the user portion 3, each time the program execution is carried out, P₁ is deciphered by the loader software by using the information carrier device 31 to produce the program P₁, and the deciphered program is converted by using the Hash Function to produce the compressed program P₂. r₁ is deciphered by using the key K(SI·A) which is common to the software supplier portion or the software and the user portion to produce r, and P₃, is deciphered by using this r to produce the deciphered program P₂. This deciphered program P₂ is compared with the above-mentioned compressed program P₂ so that it can be determined whether or not dishonest alteration of P₁ has occurred. If the occurrence of a dishonest alteration is found, it is possible to raise an alarm.

Since the enciphered algorithm P₁ and the enciphered compressed algorithm P₃ do not have the identification of the user portion 3, it is possible to preliminarily produce the same, and it is possible to deliver either from the software supplier portion 1 or from the software administration center portion 2.

Preferably, the information carrier device 31 which is attached to the program execution device 32 has a small size, a light weight, and a shape that does not need much space. Alternatively, the information carrier device is not necessarily provided and the program execution device itself may carry out all operations.

It will be understood that, in the information processing networks shown in Figs. 1 and 2, the use of the software, by a simple operation, can be allowed for only the authorized user portion, the use by other user portions being excluded, and a dishonest alteration of the software by a virus can be detected and an alarm raised.

## Claims

1. A system for protecting software comprising: a software supplier portion for preparing to supply a program to a software administration center portion and a user portion;
a software administration center portion connected to said software supplier portion for converting the supplied program in a predetermined manner and preparing to supply this converted program to the user portion; and
a user portion connected to said software supplier portion and said software administration center portion, for converting the supplied program in a predetermined manner, comparing this converted program with the converted program supplied from said software administration center portion, and, only when these compared converted programs coincide, carrying out a program execution.

2. The system according to claim 1, wherein the program is enciphered, and, when the program is determined by the user portion to be executable, the enciphered program is deciphered.

3. The system according to claim 1, wherein the converted program supplied from the software administration center portion to the user portion is enciphered, and, when at least the program is used by the user portion, the enciphered program is deciphered.

4. The system according to claim 2, wherein the program is enciphered in the software supplier portion by using a public key based on a request from the user portion or a public file, and the enciphered program is deciphered by using the secret key in the user portion.

5. The system according to claim 3, wherein the converted program is enciphered by using the secret key of the software administration center portion in the software administration center portion, and the enciphered program is deciphered by using the public key of the software administration center portion in the user portion.

6. The system according to claim 2, wherein the program is enciphered by using a key which is common to the user portion produced by applying the identificator of the user portion to the secret algorithm which is specific for the software or the software supplier portion in the software supplier portion, and the enciphered program is deciphered by using the key which is common to the software or the software supplier portion produced by applying the identifier of the software or the software supplier portion to the secret algorithm, which is specific to the user portion, in the user portion.

7. The system according to claim 3, wherein the converted program is enciphered by using a key which is common to the user portion and the software or the software supplier portion produced by applying the identifier of the user portion to the secret algorithm which is specific to the software or the software supplier portion in the software administration center portion, and the enciphered converted program is deciphered by using the key which is common to the software or the software supplier portion produced by applying the identifier of the software supplier portion to the secret algorithm which is specific to the user portion in the user portion.

8. A system for protecting software comprising: a software supplier portion for enciphering a program by a first key to produce an enciphered program and enciphering the first key by a second key to produce the enciphered first key, supplying this enciphered program to a software administration center portion, and preparing to supply the enciphered program and the enciphered first key to a user portion;
the software administration center portion connected to said software supplier portion for converting the supplied enciphered program to produce the converted enciphered program, enciphering this converted program by a third key to produce an enciphered converted program, enciphering the third key by a fourth key to produce the enciphered third key, and preparing to supply these enciphered converted program and enciphered third key to the user portion; and
the user portion connected to said software supplier portion and said software administration center portion, when the program is used, for converting the enciphered program in a predetermined manner to produce the converted program; deciphering the enciphered third key by a fifth key to produce the deciphered third key, deciphering the enciphered converted program by the third key to produce the deciphered converted program, comparing this deciphered converted program and the converted program, and, only when the compared converted programs coincide, carrying out an execution of the program deciphered by the first key deciphered by a sixth key.

9. The system according to claim 8, wherein the second key is the public key of the user portion, the sixth key is the secret key of the user portion, the fourth key is the secret key of the software administration center portion, and the fifth key is the public key of the software administration center portion.

10. The system according to claim 8, wherein the second key is the key which is common to the user portion produced by applying the identifier of the user portion to the secret algorithm of the software supplier portion or the software, and the fifth and sixth keys are the keys which are common to the software supplier portion or the software produced by applying the identifier of the software supplier portion or the software to the secret algorithm of the user portion, and the fourth key is the key which is common to the user portion produced by applying the identifier of the user portion to the secret algorithm of the software supplier portion or the software owned by the software administration center portion.
